# EUROPEAN PATENT APPLICATION

(11) **EP 2 658 234 A1**
(43) Date of publication of application: **30.10.2013**
(21) Application number: 11850880.3
(22) Date of filing: 22.12.2011
(51) Int. Cl.: H04M 15/00, H04M 1/00, H04M 3/42, H04M 17/00

(54) **MOBILE COMMUNICATION TERMINAL, CONTRACT INFORMATION MANAGEMENT SYSTEM, TERMINAL CONTROL METHOD, AND CONTRACT INFORMATION TRANSMISSION METHOD**

(30) Priority: 24.12.2010 JP 2010288795
(71) Applicant: NTT DOCOMO, INC., Chiyoda-ku Tokyo 100-6150 (JP)
(72) Inventor: WAKUI Michiko, Tokyo 100-6150 (JP); SEKIYA Naohiro, Tokyo 100-6150 (JP)
(74) Representative: Viering, Jentschura & Partner
(86) International application number: PCT/JP2011/079897
(87) International publication number: WO 2012/086795

(57) **Abstract**

Billing information based on a prepaid billing system is provided appropriately even when two or more communication sessions cannot be established simultaneously through a packet-switched network. A mobile communication terminal includes a packet communication unit for performing mobile communication based on the prepaid billing system through the packet-switched network, an acquisition unit for acquiring billing information of the mobile communication terminal from a contract information management server that manages billing information based on the prepaid billing system, through a circuit-switched network, and an output unit for outputting the billing information acquired by the acquisition unit. The contract information management system including a contract information management server includes a detection unit for detecting communication in the packet-switched network by the mobile communication terminal. When detection by the detection unit is performed, the contract information management system transmits the billing information to the mobile communication terminal through the circuit-switched network.

## Description

### Technical Field

The present invention relates to a mobile communication terminal, a contract information management system, a terminal control method, and a contract information transmission method.

### Background Art

Prepaid billing system-based mobile phones are conventionally known in which subscribers pay communication charges billed on a basis of usage of mobile phones in advance. For example, Patent Literature 1 discloses a prepaid-type mobile phone that can be purchased readily without any contract.

### Citation List

### Patent Literature

Patent Literature 1: Japanese Patent Application Laid-Open Publication No. 2001-53912

### Summary of Invention

### Technical Problem

With a mobile phone that performs packet communication based on a prepaid billing system, when the user wants to obtain the present charge balance, the user has to confirm the charge balance by connecting to a dedicated site that allows the user to confirm the charge balance through a packet-switched network. In doing so, if the mobile phone cannot establish two or more communication sessions simultaneously through the packet-switched network, the user has to temporarily disconnect the communication performed so far on the packet-switched network and reconnect to the dedicated site. Such disconnection and reconnection of communication may lead to reduction in user's convenience.

The present invention is made in view of the foregoing and aims to provide a mobile communication terminal, a contract information management system, a terminal control method, and a contract information transmission method in which billing information based on a prepaid billing system can be provided appropriately even when two or more communication sessions cannot be established simultaneously through a packet-switched network.

### Solution to Problem

In order to achieve the object above, a mobile communication terminal according to an embodiment of the present invention includes packet communication means for performing mobile communication based on a prepaid billing system through a packet-switched network, acquisition means for acquiring billing information of the mobile communication terminal from a contract information management server that manages billing information based on the prepaid billing system, through a circuit-switched network, and output means for outputting the billing information acquired by the acquisition means.

In the mobile communication terminal according to an embodiment of the present invention, while mobile communication based on packet communication is performed by establishing one communication session through the packet-switched network, the billing information based on the prepaid billing system is acquired through the circuit-switched network and output. Therefore, in the mobile communication terminal according to an embodiment of the present invention, even when two or more communication sessions cannot be established simultaneously through the packet-switched network, the billing information based on the prepaid billing system can be provided appropriately.

The mobile communication terminal according to an embodiment of the present invention may further include transmission means for transmitting a transmission request for the billing information to the contract information management server through the circuit-switched network. With this configuration, the mobile communication terminal according to an embodiment of the present invention can acquire the billing information from the contract information management server at any timing. Therefore, the billing information based on the prepaid billing system can be provided timely.

In the mobile communication terminal according to an embodiment of the present invention, the transmission means may transmit the transmission request upon detecting that origination or disconnection of packet communication is performed by the packet communication means. With this configuration, the mobile communication terminal according to an embodiment of the present invention can automatically transmit the transmission request and acquire the billing information only with origination or disconnection of packet communication being performed. Therefore, the billing information based on the prepaid billing system can be provided automatically without the user giving an instruction each time.

The mobile communication terminal according to an embodiment of the present invention may further include attachment means for attaching a portable storage medium that stores information specifying a communication carrier of the mobile communication and needs to be attached when the mobile communication is performed. The output means may store the billing information into the portable storage medium attached by the attachment means. With this configuration, even when the portable storage medium in which information specifying a communication carrier of the mobile communication is stored is attached to a different mobile communication terminal for performing mobile communication, the billing information stored in the portable storage medium can be used. Therefore, the mobile communication terminal according to an embodiment of the present invention can acquire the billing information, for example, without performing mobile communication, and the billing information based on the prepaid billing system can be provided timely.

Execution means for executing a prescribed process based on the billing information output by the output means may be further included. With this configuration, the mobile communication terminal according to an embodiment of the present invention can automatically execute an appropriate process based on the billing information, thereby improving the user's convenience.

The present invention can be described as an invention of a mobile communication terminal as described above. In addition, the present invention can also be described as an invention of a terminal control method as follows. They fall under different categories but are substantially the same invention and achieve similar operation and effects.

Specifically, a terminal control method according to an embodiment of the present invention includes a packet communication step of performing mobile communication based on a prepaid billing system through a packet-switched network, an acquisition step of acquiring billing information of the terminal from a contract information management server that manages billing information based on the prepaid billing system, through a circuit-switched network, and an output step of outputting the billing information acquired in the acquisition step.

In order to achieve the object above, a contract information management system according to an embodiment of the present invention includes a contract information management server that manages billing information based on a prepaid billing system of mobile communication by a mobile communication terminal in a packet-switched network. The contract information management system includes detection means for detecting communication in the packet-switched network by the mobile communication terminal, and billing information transmission means for transmitting the billing information to the mobile communication terminal through a circuit-switched network when detection by the detection means is performed.

In the contract information management system according to an embodiment of the present invention, when communication in the packet-switched network by the mobile communication terminal is detected, the billing information is transmitted to the mobile communication terminal through the circuit-switched network. Therefore, with the contract information management system according to an embodiment of the present invention, even when the mobile communication terminal cannot establish two or more communication sessions simultaneously through the packet-switched network, the billing information based on the prepaid billing system can be provided appropriately to the mobile communication terminal.

The detection means may further confirm whether the prepaid billing system is applied to the mobile communication terminal. When detection by the detection means is performed and the detection means confirms that the prepaid billing system is applied to the mobile communication terminal, the billing information transmission means may transmit the billing information. With this configuration, the contract information management system according to an embodiment of the present invention transmits the billing information, for example, only when the prepaid billing system is applied to the mobile communication terminal, thereby eliminating transmission of the billing information that is not required by the user of the mobile communication terminal. Thus, the network load can be reduced.

The present invention can be described as an invention of a contract information management system as described above. In addition, the present invention can also be described as an invention of a contract information transmission method as follows. They fall under different categories but are substantially the same invention and achieve similar operation and effects.

Specifically, a contract information transmission method according to an embodiment of the present invention is performed by a contract information management system including a contract information management server that manages billing information based on a prepaid billing system for mobile communication by a mobile communication terminal in a packet-switched network. The contract information transmission method includes a detection step of detecting communication in the packet-switched network by the mobile communication terminal, and a billing information transmission step of transmitting the billing information to the mobile communication terminal through a circuit-switched network when detection in the detection step is performed.

### Advantageous Effects of Invention

Billing information based on a prepaid billing system can be provided appropriately even when two or more communication sessions cannot be established simultaneously through a packet-switched network.

### Brief Description of Drawings

[Fig. 1]Fig. 1 is a diagram showing a concept of a communication system according to an embodiment of the present invention.
[Fig. 2]Fig. 2 is a diagram showing a configuration of a mobile communication terminal according to the embodiment of the present invention.
[Fig. 3]Fig. 3 is a diagram showing a configuration of a contract information management system according to the embodiment of the present invention.
[Fig. 4] Fig. 4 is a diagram showing an example of screen display of the mobile communication terminal.
[Fig. 5]Fig. 5 is a table showing an example of billing information stored in a portable storage medium.
[Fig. 6]Fig. 6 is a diagram showing a hardware configuration of the mobile communication terminal according to the embodiment of the present invention.
[Fig. 7]Fig. 7 is a diagram showing a hardware configuration of the contract information management system according to the embodiment of the present invention.
[Fig. 8]Fig. 8 is a flowchart showing a process (terminal control method) performed in the mobile communication terminal and the contract information management system according to the embodiment of the present invention.
[Fig. 9]Fig. 9 is a flowchart showing a process (terminal control method and contract information transmission method) performed in the mobile communication terminal and the contract information management system according to the embodiment of the present invention.
[Fig. 10] Fig. 10 is another flowchart showing a process (terminal control method and contract information transmission method) performed in the mobile communication terminal and the contract information management system according to the embodiment of the present invention.

### Description of Embodiments

Embodiments of a mobile communication terminal, a contract information management system, a terminal control method, and a contract information transmission method according to the present invention will be described in detail below in conjunction with the figures. It is noted that in the following description of the figures, the same elements are denoted with the same reference signs, and overlapping descriptions will be omitted.

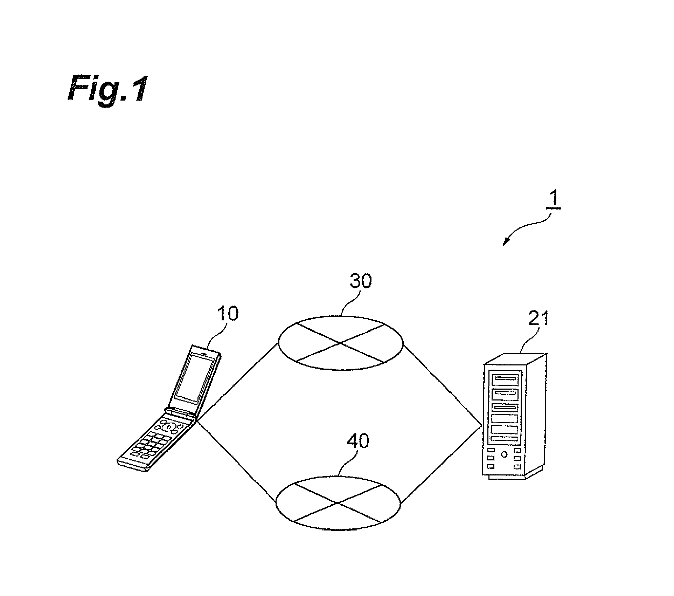

Fig. 1 is a diagram showing an overall configuration of a communication system 1 in the present embodiment. As shown in Fig. 1, the communication system 1 is configured to include a mobile communication terminal 10, a contract information management server 21, a packet-switched network 30, and a circuit-switched network 40. The mobile communication terminal 10 is a device capable of performing mobile communication based on a cellular system and specifically corresponds to a mobile phone, etc. The contract information management server 21 is a server that manages user information of the user of the mobile communication terminal 10. The contract information management server 21 is specifically an HLR (Home Location Register). The contract information management server 21 is included in a contract information management system 20 as described later. The contract information management system 20 may include an SGSN (Serving GPRS Support Node) as described later. The packet-switched network 30 and the circuit-switched network 40 are networks that relay the mobile communication terminal 10 and the contract information management server 21. The packet-switched network 30 and the circuit-switched network 40 may include a VLR (Visitor Location Register) for temporarily storing user information of the HLR. Between the mobile communication terminal 10 and the contract information management server 21, packet communication can be performed through the packet-switched network 30, and circuit-switched communication can be performed through the circuit-switched network 40.

Here, the user information managed in the contract information management server 21 includes billing information of the user of the mobile communication terminal 10 based on a prepaid billing system for mobile communication in the packet-switched network 30. The billing information is stored and managed in a database 22 included in the contract information management server 21. The billing information is retained for each APN (Access Point Name) which is a connection destination when the mobile communication terminal 10 connects to the packet-switched network 30 or the like. The prepaid billing system is a system in which a certain fixed fee is paid in advance to a communication carrier providing mobile communication, so that mobile communication can be performed within the time or packet communication volume corresponding to the prepaid charge. When the time or packet communication volume corresponding to the prepaid charge is used up during mobile communication in the prepaid billing system, connection is cut off, thereby disabling mobile communication afterward. A specific example of the billing information includes a charge balance. The charge balance refers to a charge left after subtracting the charge for the actual mobile communication from the prepaid charge, that is, a charge that can be used to perform mobile communication, or a time or packet communication volume that allows mobile communication with the charge in the prepaid billing system. The billing information is input, for example, by the communication carrier providing mobile communication, based on the contents of the contract signed by the user.

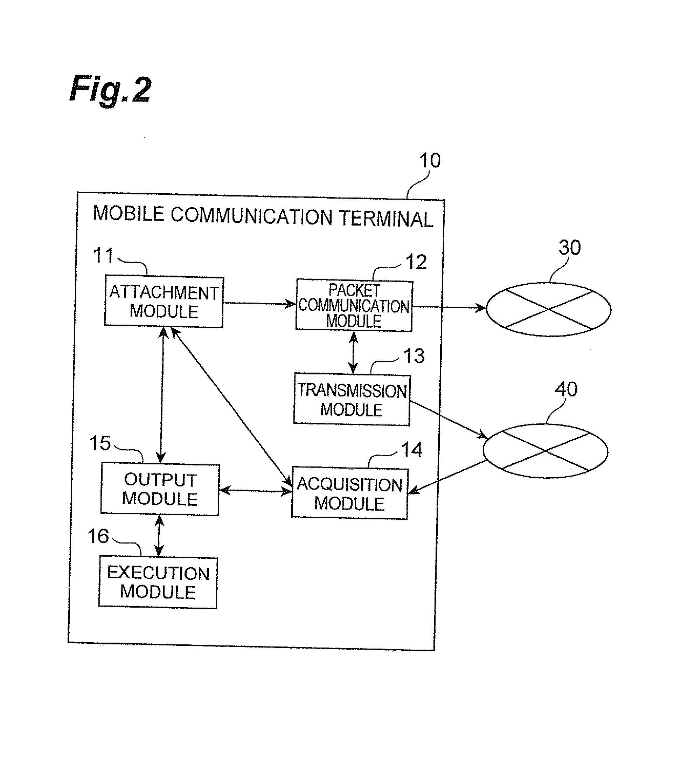

First, a configuration of the mobile communication terminal 10 will be described. As shown in Fig. 2, the mobile communication terminal 10 is configured to include an attachment unit 11, a packet communication unit 12, a transmission unit 13, an acquisition unit 14, an output unit 15, and an execution unit 16. The mobile communication terminal 10 may include, for example, a function as a portable phone in addition to the components above.

The attachment unit 11 is attachment means for attaching a portable storage medium that stores information specifying a communication carrier of mobile communication subscribed by the user of the mobile communication terminal 10 and needs to be attached when mobile communication is performed. Specifically, the attachment unit 11 is configured with a physical connection terminal that can be connected with the portable storage medium for reading information from the portable storage medium or writing information into the portable storage medium.

Here, the portable storage medium specifically corresponds to, for example, a SIM (Subscriber Identity Module) card that is a subscriber authentication module. Information for identifying the user of mobile communication terminal 10 who is the subscriber to mobile communication or the telephone number of the user may be stored in the portable storage medium. The portable storage medium can be attached to a mobile communication terminal different from the mobile communication terminal 10 so that mobile communication can be performed with the same user's telephone number and the same contents of the user's contract in a plurality of mobile communication terminals.

The packet communication unit 12 is packet communication means for performing mobile communication on the prepaid billing system through the packet-switched network 30. As the packet communication unit 12 performs mobile communication through the packet-switched network 30, the billing information of the user of the mobile communication terminal 10 that is managed by the contract information management server 21 is updated. Specifically, as the packet communication unit 12 performs mobile communication through the packet-switched network 30, the charge balance of the user of the mobile communication terminal 10 that is managed by the contract information management server 21 is reduced.

The transmission unit 13 is transmission means for transmitting a transmission request for billing information to the contract information management server 21 through the circuit-switched network 40. Specifically, the transmission unit 13 transmits a USSD (Unstructured Supplementary Service Data) code for inquiring about the billing information of the user of the mobile communication terminal 10 to the contract information management server 21 through the circuit-switched network 40. When transmitted through the circuit-switched network 40, the USSD code may pass through the VLR included in the circuit-switched network 40. The transmission request transmitted by transmission unit 13 is not limited to a USSD code. For example, the transmission request transmitted by transmission unit 13 may be a message such as SMS.

The transmission unit 13 may transmit the transmission request upon detecting that origination or disconnection of packet communication is performed by the packet communication unit 12. The transmission unit 13 may transmit the transmission request for each origination or disconnection of packet communication. For example, the transmission unit 13 may transmit the transmission request when a predetermined number of originations or disconnections are performed since transmission of the previous transmission request. Such a mechanism for reducing the number of times the transmission request is transmitted may be adopted in the mobile communication terminal 10.

Here, upon receiving the USSD code transmitted from the transmission unit 13, the contract information management server 21 may extract, for example, the charge balance, which is the billing information of the user of the mobile communication terminal 10, from the database 22 described later. Then, the contract information management server 21 transmits the extracted charge balance to the mobile communication terminal 10 through the circuit-switched network 40. When transmitted to the mobile communication terminal 10, the charge balance as the billing information may pass through the VLR included in the circuit-switched network 40. A notification from the contract information management server 21 may be a USSD code or a message such as SMS.

The acquisition unit 14 is acquisition means for acquiring (receiving) the billing information of the mobile communication terminal from the contract information management server 21 that manages the billing information based on the prepaid billing system through the circuit-switched network 40. The acquisition unit 14 may acquire the billing information of the mobile communication terminal that is transmitted from the contract information management server 21 through the circuit-switched network 40 based on the transmission request transmitted by the transmission unit 13. For example, the acquisition unit 14 acquires the charge balance as the billing information transmitted from the contract information management server 21 via the circuit-switched network 40, as a response to the USSD code transmitted by the transmission unit 13 for inquiring about the billing information of the user of the mobile communication terminal 10. The acquisition unit 14 outputs the acquired billing information to the output unit 15. The billing information acquired by the acquisition unit 14 is not limited to the billing information transmitted via the circuit-switched network 40. For example, the acquisition unit 14 may acquire the billing information stored in the portable storage medium attached by the attachment unit 11.

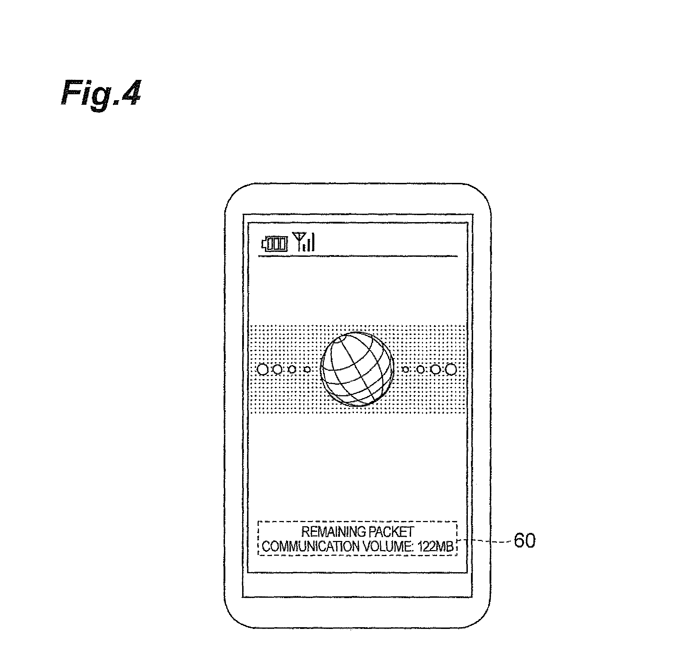

The output unit 15 is output means for outputting the billing information acquired by the acquisition unit 14. Specifically, the output unit 15 displays the charge balance input from the acquisition unit 14 on the screen of the mobile communication terminal 10. Fig. 4 is a diagram showing a screen of the mobile communication terminal 10 when the mobile communication terminal 10 is performing mobile communication based on the prepaid billing system using the packet communication unit 12 through the packet-switched network 30. As shown by a charge balance display 60 in Fig. 4, the output unit 15 displays that the remaining packet communication volume is 122 MB on the screen of the mobile communication terminal 10, based on the content of the charge balance input from the acquisition unit 14, thereby giving a notification to the user of the mobile communication terminal 10. In this manner, the output unit 15 may provide display in accordance with the billing information. The user of the mobile communication terminal 10 confirms the content of the charge balance display 60 output by the output unit 15 and can take actions of, for example, refraining from packet communication afterward because of a low charge balance left, or increasing the charge balance by paying additional fees in advance to the communication carrier of mobile communication.

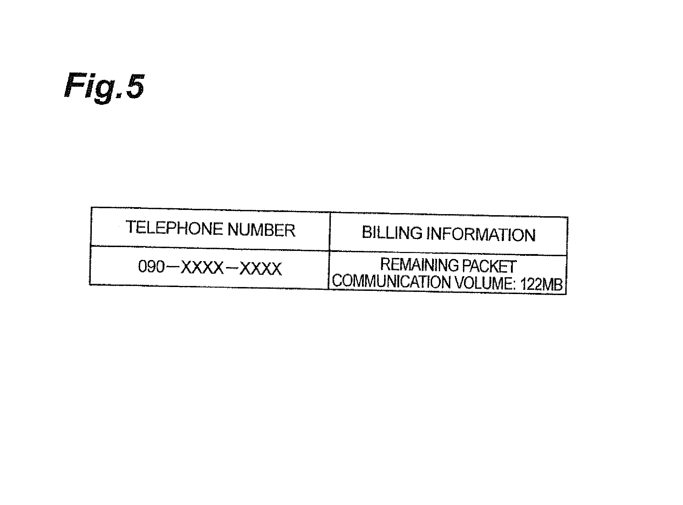

The output unit 15 may store the billing information into the portable storage medium attached by the attachment unit 11. Specifically, the output unit 15 stores the charge balance input from the acquisition unit 14 into a SIM card attached by the attachment unit 11. For example, as shown in Fig. 5, the output unit 15 stores information that associates the telephone number of the user of the mobile communication terminal 10 with the content of the charge balance acquired by the acquisition unit 14, into a SIM card. The billing information may not be newly stored by the output unit 15 even when a prescribed period has passed since the billing information is stored into the portable storage medium by the output unit 15. In this case, the mobile communication terminal 10 may acquire the latest billing information from the contract information management server 21 using the transmission unit 13 and the acquisition unit 14 and may store the acquired billing information using the output unit 15.

The execution unit 16 is execution means for executing a prescribed process based on the billing information output by the output unit 15. Specifcally, the execution unit 16 inputs the charge balance output by the output unit 15, determines the input charge balance, and executes a prescribed application prestored in the mobile communication terminal 10 and executable in the mobile communication terminal 10, in accordance with the determination result. For example, if the execution unit 16 determines that the charge balance is less than a prescribed amount, the execution unit 16 may execute an application for switching APNs. For example, if the execution unit 16 determines that the charge balance is less than a prescribed amount, the execution unit 16 may restrict execution and use of an application that involves large volume data communication. For example, the execution unit 16 may launch an application for connecting to an operator billing site or make a conversion into a standby user interface or a mode for prompting for menus, in accordance with the determination of the charge balance by the execution unit 16.

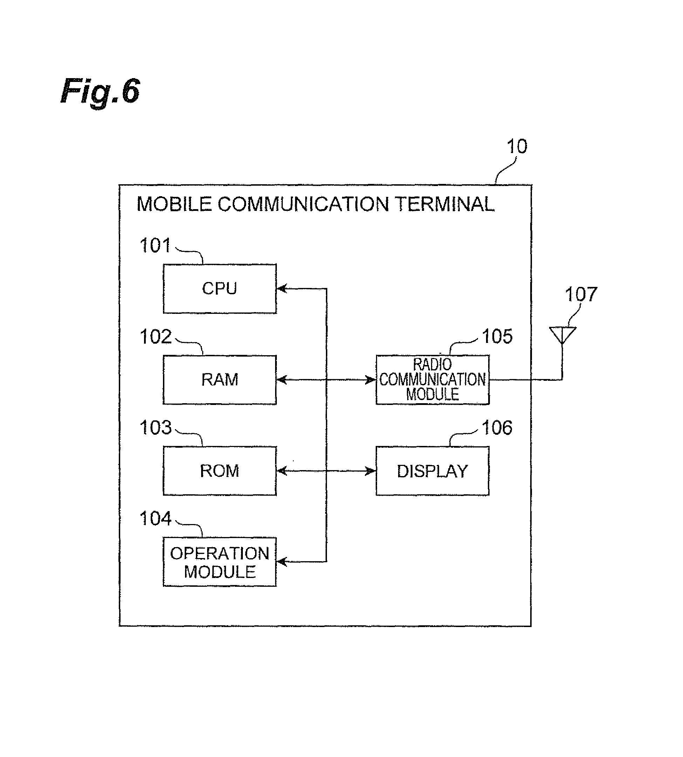

Fig. 6 shows a hardware configuration of the mobile communication terminal 10. As shown in Fig. 6, the mobile communication terminal 10 is configured with hardware mainly including a CPU (Central Processing Unit) 101, a RAM (Random Access Memory) 102 and a ROM 103 (Read Only Memory) as main memory, an operation unit 104, a radio communication unit 105, a display 106, and an antenna 107. These components operate to fulfill each function of the mobile communication terminal 10 as described above.

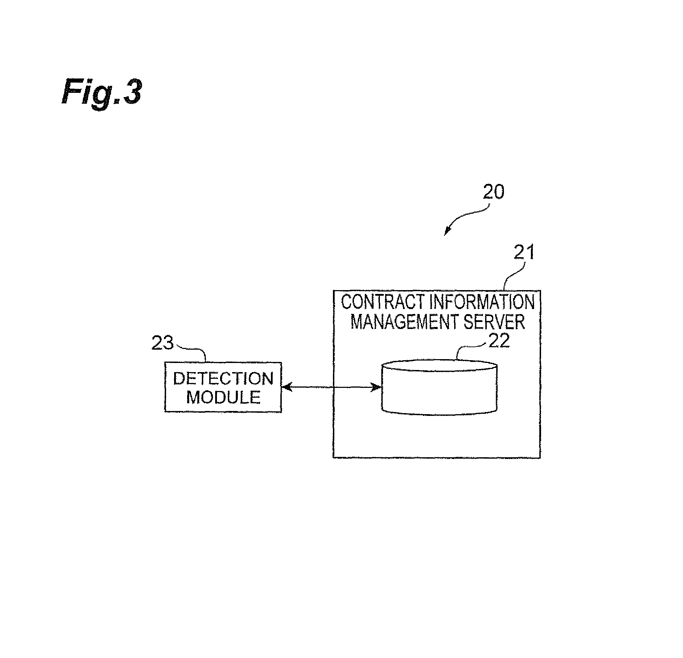

Next, a configuration of the contract information management system 20 will be described. As shown in Fig. 3, the contract information management system 20 is configured to include a contract information management server 21 and a detection unit 23. The contract information management server 21 is configured to include a database 22. The contract information management server 21 and the database 22 have already been described above, and therefore a description is omitted here. The detection unit 23 is, for example, one function of an SGSN which is an exchange that constitutes the packet-switched network 3 0.

The detection unit 23 is detection means for detecting communication (mobile communication) in the packet-switched network 30 by the mobile communication terminal 10. Specifically, the detection unit 23 detects that one of origination, communication, and disconnection of packet communication is performed by the packet communication unit 12 of the mobile communication terminal 10. The detection unit 23 may detect that a transmission request for billing information that is transmitted by the transmission unit 13 of the mobile communication terminal 10 is received. The detection unit 23 may further confirm whether the prepaid billing system is applied to the mobile communication terminal 10. Specifically, the detection unit 23 specifies the user of the mobile communication terminal 10 performing the detected mobile communication and extracts the billing information of the specified user that is stored in the database 22. Then, the detection unit 23 confirms whether the prepaid billing system is applied to the specified user, based on the extracted billing information. The detection unit 23 may retain the billing information in the mobile communication terminal and confirm based on the retained billing information. The user's billing system such as a prepaid billing system or a post-paid billing system is registered in advance in the billing information. The detection unit 23 transmits the billing information of the specified user and the confirmation result as to whether the prepaid billing system is applied to the specified user to the contract information management system 20. The contract information management system 20 receiving the confirmation result transmits the billing information to the mobile communication terminal 10 through the circuit-switched network 40.

The contract information management system 20 may transmit the billing information when detection by the detection unit 23 is performed and it is confirmed by the detection unit 23 that the prepaid billing system is applied to the mobile communication terminal 10. Specifically, when the confirmation result that the prepaid billing system is applied to the user is input by the detection unit 23, the contract information management system 20 transmits the billing information of the user input by the detection unit 23 to the mobile communication terminal 10 of the user through the circuit-switched network 40.

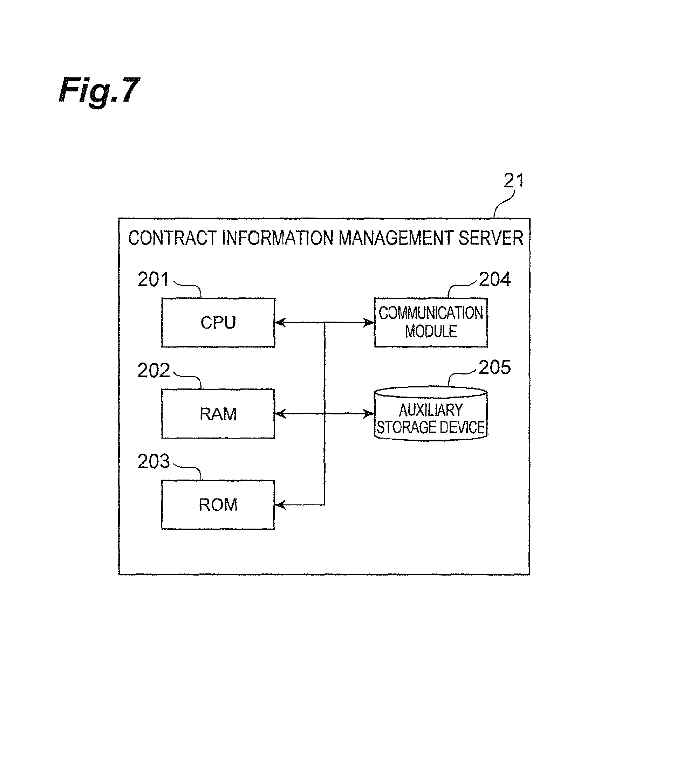

Fig. 7 shows a hardware configuration of the contract information management server 21. As shown in Fig. 7, the contract information management server 21 is configured with hardware mainly including a CPU 201, a RAM 202 and a ROM 203 as main memory, a communication module 204, and an auxiliary storage device 205. These components operate to fulfill each function of the contract information management server 21 as described above. It is noted that the detection unit 23 also operates on a similar hardware configuration.

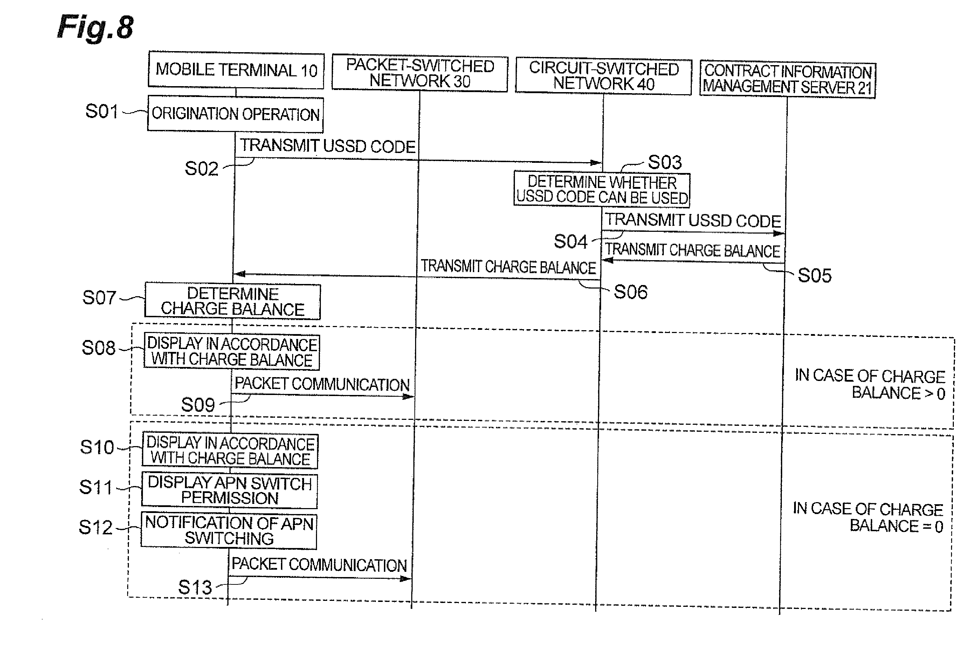

Next, the processes (terminal control method and contract information transmission method) executed in the mobile communication terminal 10 and the contract information management system 20 according to the present embodiment will be described using the flowcharts shown in Figs. 8, 9, and 10. First, the flowchart shown in Fig. 8 will be described. The flowchart shown in Fig. 8 is a diagram illustrating a flow of a process of making an inquiry about the charge balance from the mobile communication terminal 10 to the contract information management server 21 through the circuit-switched network 40 and performing a process in the mobile communication terminal 10 in accordance with information indicative of the charge balance acquired as a result of the inquiry.

First, the packet communication unit 12 performs an origination operation for mobile communication performed based on the prepaid billing system through the packet-switched network 30 (S01, packet communication step). When triggered by the origination operation in S01, the transmission unit 13 transmits a USSD code for inquiring about the charge balance to the VLR included in the circuit-switched network 40 (S02).

The VLR receiving the USSD code determines whether the user of the mobile communication terminal 10 is a user who can use the received USSD code, based on the billing information stored in the mobile communication terminal (S03). It is noted that information as to whether the user can use a USSD code is registered in advance in the billing information. If the VLR determines that the user of the mobile communication terminal 10 cannot use the received USSD code, the VLR does not perform the subsequent process. In this manner, restriction is imposed on the user who cannot use the USSD code, thereby reducing the traffic of the network.

If the VLR determines that the user of the mobile communication terminal 10 can use the received USSD code, the VLR transmits the USSD code to the contract information management server 21 (S04). The contract information management server 21 receiving the USSD code transmits information indicative of the charge balance of the user of the mobile communication terminal 10, as a reply to the received USSD code, to the circuit-switched network 40 (S05). The information indicative of the charge balance that is transmitted to the circuit-switched network 40 is transmitted to the mobile communication terminal 10, so that the information indicative of the charge balance is acquired by the acquisition unit 14 (S06, acquisition step). The acquired information indicative of the charge balance is output from the acquisition unit 14 to the output unit 15.

Then, the output unit 15 makes a determination as to whether the charge balance input from the acquisition unit 14 is greater than zero or equal to zero (S07). In S07, if it is determined that the charge balance is greater than zero, the output unit 15 provides display in accordance with the information indicative of the charge balance (S08, output step). For example, the display may indicate that there is enough charge balance. Then, the mobile communication terminal 10 starts mobile communication based on the prepaid billing system using the packet communication unit 12 through the packet-switched network 30 (S09).

In S07, if it is determined that the charge balance is zero, the output unit 15 provides display in accordance with the information indicative of the charge balance (S10, output step). For example, the display may indicate that the charge balance is zero. Next, for example, an APN switch permission indicating whether the APN connected to by the mobile communication terminal 10 can be changed to a different APN is transmitted from the SGSN included in the packet-switched network 30 to the mobile communication terminal 10 and displayed on the screen of the mobile communication terminal 10 (S11). In S11, if the user does not permit, the subsequent process is not performed. In S11, if the user permits, the APN connected is switched to an APN permitted by the user. When the switching of APNs is completed, a notification thereof is given to the mobile communication terminal 10 (S12). Then, the mobile communication terminal 10 starts mobile communication based on the prepaid billing system using the packet communication unit 12 through the packet-switched network 30 (S13).

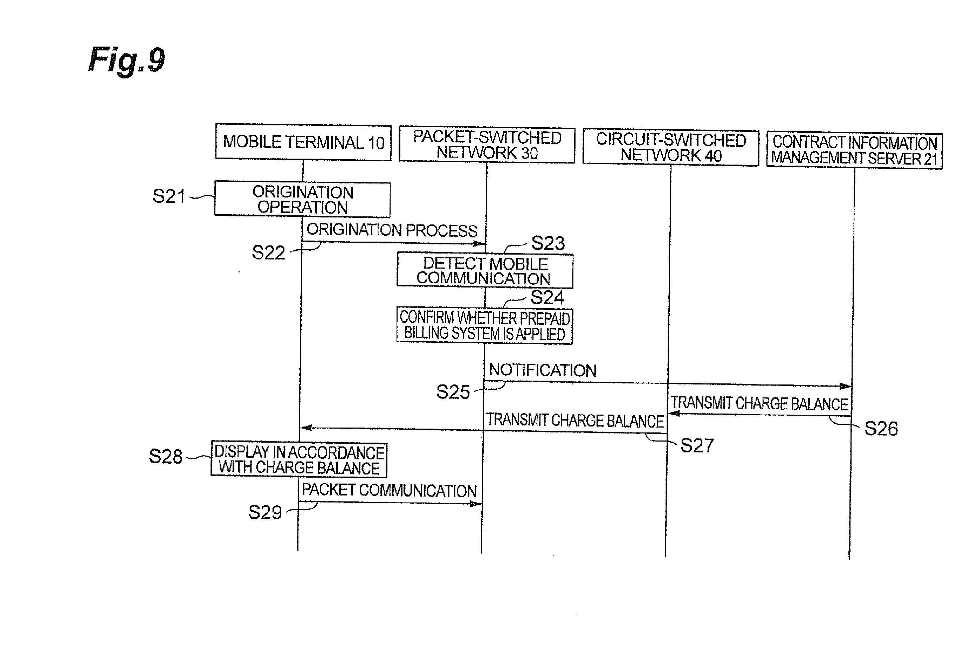

Next, the flowchart shown in Fig. 9 will be described. The flowchart shown in Fig. 9 is a diagram illustrating a flow of a process of transmitting information indicative of the charge balance from the contract information management server 21 to the mobile communication terminal 10 when mobile communication of the mobile communication terminal 10 in the packet-switched network is detected.

First, the packet communication unit 12 performs an origination operation for mobile communication performed based on the prepaid billing system through the packet-switched network 30 (S21, packet communication step). The packet communication unit 12 transmits an origination process of the origination operation in S21 to the detection unit 23 of the SGSN which is included in the packet-switched network 30 and also included in the contract information management system 20 (S22). When the origination process is transmitted to the detection unit 23, the detection unit 23 detects mobile communication in the packet-switched network 30 by the mobile communication terminal 10 (S23, detection step). The detection unit 23 detecting mobile communication further confirms whether the prepaid billing system is applied to the mobile communication terminal 10. If the detection unit 23 confirms that the prepaid billing system is not applied to the mobile communication terminal 10, the subsequent process is not performed.

If the detection unit 23 confirms that the prepaid billing system is applied to the mobile communication terminal 10, the detection unit 23 transmits a notification for prompting for transmission of the billing information to the mobile communication terminal 10, to the contract information management server 21 (S25). The contract information management server 21 receiving the notification transmits information indicative of the charge balance of the user of the mobile communication terminal 10 to the circuit-switched network 40 (S26, billing information transmission step). The transmission of information indicative of the charge balance by the contract information management server 21 in S26 may be performed every time an origination process is received from the mobile communication terminal 10, or may be performed when the charge balance is low, for example, when the remaining time as the charge balance is 10 minutes or the remaining communication volume is 1 M. The user of the mobile communication terminal 10 may set when to trigger transmission of the information indicative of the charge balance by the contract information management server 21 in S26.

The information indicative of the charge balance that is transmitted to the circuit-switched network 40 is transmitted to the mobile communication terminal 10, so that the information indicative of the charge balance is acquired by the acquisition unit 14 (S27, acquisition step). The acquired information indicative of the charge balance is output from the acquisition unit 14 to the output unit 15.

Then, the output unit 15 provides display in accordance with the information indicative of the charge balance that is input from the acquisition unit 14 on the screen of the mobile communication terminal 10 (S28, output step). Then, the packet communication unit 12 performs packet communication based on the prepaid billing system through the packet-switched network 30 (S29). It is noted that the packet communication in S29 may be performed at any time after S22.

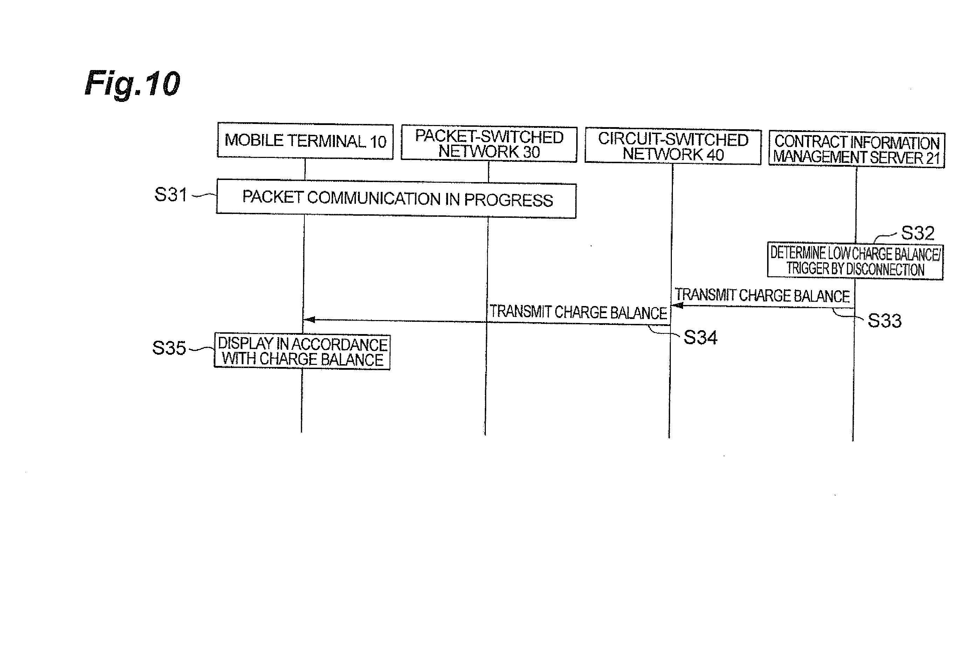

Next, the flowchart shown in Fig. 10 will be described. The flowchart shown in Fig. 10 is a diagram illustrating a flow of a process of transmitting information indicative of the charge balance from the contract information management server 21 to the mobile communication terminal 10 when the mobile communication terminal 10 is performing mobile communication through packet-switched network 30.

During the entire process shown in Fig. 10, the packet communication unit 12 intermittently performs packet communication based on the prepaid billing system through the packet-switched network 30 (S31). Here, the detection unit 23 detects that the charge balance of the user of the mobile communication terminal 10 becomes smaller than a predetermined balance or that packet communication of the mobile communication terminal 10 is disconnected (S32).

When detection by the detection unit 23 is performed, the contract information management server 21 transmits information indicative of the charge balance of the user of the mobile communication terminal 10 to the circuit-switched network 40 (S33). It is noted that the user of the mobile communication terminal 10 may set when to trigger transmission of information indicative of the charge balance by the contract information management server 21 in S33. The information indicative of the charge balance that is transmitted to the circuit-switched network 40 is transmitted to the mobile communication terminal 10, so that the information indicative of the charge balance is acquired by the acquisition unit 14 (S34, acquisition step). The acquired information indicative of the charge balance is output from the acquisition unit 14 to the output unit 15.

Then, the output unit 15 provides display in accordance with the information indicative of the charge balance that is input from the acquisition unit 14 on the screen of the mobile communication terminal 10 (S35, output step). The processes executed in the mobile communication terminal 10 and the contract information management system 20 (terminal control method and contract information transmission method) according to the present embodiment have been described above.

According to the present embodiment, in the mobile communication terminal 10, while mobile communication based on packet communication is performed by establishing one communication session through the packet-switched network 30, the billing information based on the prepaid billing system is acquired through the circuit-switched network 40 and output. Therefore, even when the mobile communication terminal 10 cannot establish two or more communication sessions simultaneously through the packet-switched network 30, the billing information based on the prepaid billing system can be provided appropriately.

As in the present embodiment, the transmission unit 13 may transmit a transmission request for billing information to the contract information management server 21 through the circuit-switched network 40. The acquisition unit 14 may acquire the billing information transmitted from the contract information management server 21 based on the transmission request transmitted by the transmission unit 13. With this configuration, the mobile communication terminal 10 can acquire the billing information from the contract information management server 21 at any timing. Therefore, the billing information based on the prepaid billing system can be provided timely.

As in the present embodiment, the transmission unit 13 may transmit the transmission request upon detecting that origination or disconnection of packet communication is performed by the packet communication unit 12. With this configuration, the mobile communication terminal 10 can automatically transmit the transmission request and acquire the billing information only with origination or disconnection of packet communication being performed. Therefore, the billing information based on the prepaid billing system can be provided automatically without the user giving an instruction each time.

As in the present embodiment, a SIM card may be attached by the attachment unit 11, and the output unit 15 may store the billing information in the SIM card attached by the attachment unit 11. With this configuration, even when a SIM card in which information specifying a communication carrier of mobile communication is stored is attached to a different mobile communication terminal for performing mobile communication, the billing information stored in the SIM card can be used. Therefore, the mobile communication terminal 10 can acquire the billing information, for example, without performing mobile communication, and the billing information based on the prepaid billing system can be provided timely.

As in the present embodiment, the output unit 15 may provide display in accordance with the billing information. With this configuration, the mobile communication terminal 10 can give a notification of the billing information based on the prepaid billing system to the user of the mobile communication terminal 10. The user receiving the notification can take appropriate actions based on the billing information, thereby improving the user's convenience.

As in the present embodiment, the execution unit 16 may execute a prescribed process based on the billing information output by the output unit 15. With this configuration, the mobile communication terminal 10 can automatically execute an appropriate process based on the billing information, thereby improving the user's convenience.

According to the present embodiment, in the contract information management system 20, when mobile communication in packet-switched network 30 by the mobile communication terminal 10 is detected, the billing information is transmitted to the mobile communication terminal 10 through the circuit-switched network 40. Therefore, even when the mobile communication terminal 10 cannot establish two or more communication sessions simultaneously through the packet-switched network 30, the billing information based on the prepaid billing system can be provided appropriately to the mobile communication terminal 10.

As in the present embodiment, the detection unit 23 may confirm whether the prepaid billing system is applied to the mobile communication terminal 10. When detection by the detection unit 23 is performed and it is confirmed by the detection unit 23 that the prepaid billing system is applied to the mobile communication terminal 10, the contract information management system 20 may transmit the billing information. With this configuration, the contract information management system 20 transmits the billing information, for example, only when the prepaid billing system is applied to the mobile communication terminal 10, thereby eliminating transmission of the billing information that is not required by the user of the mobile communication terminal 10. Thus, the network load can be reduced.

The foregoing embodiment mainly uses a communication system based on GPRS (General Packet Radio Service). However, the present invention is not limited to such a communication system and is applicable appropriately to a communication system capable of communicating packet data, for example, applicable to a new communication system such as LTE (Long Term Evolution). In this case, an equivalent to a GGSN (Gateway GPRS Support Node) is a P-GW (Packet Data Network Gateway), and an equivalent to an SGSN is an MME (Mobility Management Entity) or an S-GW (Serving Gateway). An equivalent to the contract information management server 21 is an HSS (Home Subscriber System). PCRF (Policy and Charging Rule Function) may be used as the contract information management sever 21.

### Reference Signs List

1... communication system, 10... mobile communication terminal, 11... attachment unit, 12... packet communication unit, 13... transmission unit, 14... acquisition unit, 15... output unit, 16... execution unit, 20... contract information management system, 21... contract information management server, 22... database, 23... detection unit, 30... packet-switched network, 40... circuit-switched network.

## Claims

1. A mobile communication terminal comprising:
packet communication means for performing mobile communication based on a prepaid billing system through a packet-switched network;
acquisition means for acquiring billing information of the mobile communication terminal from a contract information management server that manages billing information based on the prepaid billing system, through a circuit-switched network; and
output means for outputting the billing information acquired by the acquisition means.

2. The mobile communication terminal according to claim 1, further comprising transmission means for transmitting a transmission request for the billing information to the contract information management server through the circuit-switched network.

3. The mobile communication terminal according to claim 2, wherein the transmission means transmits the transmission request upon detecting that origination or disconnection of packet communication is performed by the packet communication means.

4. The mobile communication terminal according to any one of claims 1 to 3, further comprising attachment means for attaching a portable storage medium that stores information specifying a communication carrier of the mobile communication and needs to be attached when the mobile communication is performed, wherein
the output means stores the billing information into the portable storage medium attached by the attachment means.

5. The mobile communication terminal according to any one of claims 1 to 4, further comprising execution means for executing a prescribed process based on the billing information output by the output means.

6. A terminal control method comprising:
a packet communication step of performing mobile communication based on a prepaid billing system through a packet-switched network;
an acquisition step of acquiring billing information of the terminal from a contract information management server that manages billing information based on the prepaid billing system, through a circuit-switched network; and
an output step of outputting the billing information acquired in the acquisition step.

7. A contract information management system that comprises a contract information management server that manages billing information based on a prepaid billing system of mobile communication by a mobile communication terminal in a packet-switched network, the contract information management system comprising:
detection means for detecting communication in the packet-switched network by the mobile communication terminal; and
billing information transmission means for transmitting the billing information to the mobile communication terminal through a circuit-switched network when detection by the detection means is performed.

8. The contract information management system according to claim 7, wherein
the detection means further confirms whether the prepaid billing system is applied to the mobile communication terminal, and
when detection by the detection means is performed and the detection means confirms that the prepaid billing system is applied to the mobile communication terminal, the billing information transmission means transmits the billing information.

9. A contract information transmission method performed by a contract information management system that comprises a contract information management server that manages billing information based on a prepaid billing system for mobile communication by a mobile communication terminal in a packet-switched network, the contract information transmission method comprising:
a detection step of detecting communication in the packet-switched network by the mobile communication terminal; and
a billing information transmission step of transmitting the billing information to the mobile communication terminal through a circuit-switched network when detection in the detection step is performed.
